# EUROPEAN PATENT SPECIFICATION

(11) **EP 1 168 127 B1**
(45) Date of publication and mention of the grant of the patent: **21.04.2004**
(21) Application number: 01114963.0
(22) Date of filing: 20.06.2001
(51) Int. Cl.: G05B 19/4065

(54) **Method of controlling lifetime of complex tool**
Verfahren zur Kontrolle der Lebensdauer eines Kombinationswerkzeuges
Méthode de controle de la durée de vie d'un outil combiné

(30) Priority: 23.06.2000 JP 2000189407; 18.04.2001 JP 2001119295
(43) Date of publication of application: 02.01.2002
(73) Proprietor: YAMAZAKI MAZAK KABUSHIKI KAISHA, Niwa-gun Aichi-ken (JP)
(72) Inventor: Yamazaki, Tsunehiko, Nagoya-shi, Aichi-ken (JP); Fukumura, Naoe, Chikusa-ku, Nagoya-shi, Aichi-ken (JP); Mizukado, Masayoshi, Kani-shi, Gifu-ken (JP); Kikata, Kazuhiro, Gifu-shi, Gifu-ken (JP); Miyazaki, Sadami, Konan-shi, Aichi-ken (JP); Maki, Koichi, Nagoya-shi, Aichi-ken (JP)
(74) Representative: Bauer, Wulf, Dr.

(56) References cited:
- EP-A- 0 924 584
- DE-A- 3 121 461
- US-A- 4 890 306
- US-A- 5 485 391

## Description

### BACKGROUND OF THE INVENTION

This invention relates to method of controlling lifetime of complex tool, having a plurality of inserts on a single holder portion, capable of performing turning machining and rotational tool machining such as drilling/milling machining (So-called "milling machining" in the present specification usually includes fraise machining to be used as the same meaning as milling machining.) with one tool.

The proposal in recent years is that the complex tool installing a plurality of inserts on a single tool is used and turning machining and rotational tool machining such as drilling/milling machining are performed selectively using these inserts for machining on a workpiece such that the trouble of exchange of tool is omitted and the machining efficiency is improved.

But, the problem as to how to control lifetime of the complex tool installing a plurality of inserts thereon has not yet been resolved. So, a desire for development of some effective method of controlling lifetime is increasing.

The object of the present invention is to provide method of controlling lifetime of complex tool, capable of properly executing control of lifetime of the complex tool installing a plurality of inserts thereon, taking the above-mentioned circumstances into consideration.

The US patent 5 485 391 discloses an example of monitoring the life expectancy of tools movably fitted on a tarret.

### SUMMARY OF THE INVENTION

The objectives of the invention are achieved by the method of claim 1.

According to the invention of claim 1, when only one insert of the inserts comprising the complex tool reaches expiration of lifetime, the machining with the complex tool can be immediately stopped. Then, such situation that a lowering of machining accuracy by continuing to use the insert which reaches expiration of lifetime can be avoided. Since the machining time element is integrated every insert, the inserts which reaches expiration of lifetime and others of the same complex tool can be clearly differentiated from one another. Therefore, by exchanging only insert which reaches expiration of lifetime, the complex tool can be immediately reused for machining. Then, idle time is shortened and tool maintenance is made easier.

The invention of claim 2 is the method of controlling lifetime of the complex tool wherein said machining time element is an used time for using the insert when a workpiece is machined.

According to the invention of claim 2, the expiration of lifetime of each insert can be correctly controlled since the machining time element to be integrated is the used time of the insert.

The invention of claim 3 is the method of controlling lifetime of the complex tool wherein said machining time element is a machining number of workpieces by the insert.

According to the invention of claim 3, the machining time element to be integrated is the machining number of workpieces by the insert. When many of the same workpieces are machined, the expiration of lifetime of the complex tool can be controlled by the number of workpieces machined. So, it is not necessary to separately measure machining time, and its control is easy.

The invention of claim 4 is the method of controlling lifetime of the complex tool wherein when said machining time element is integrated, the machining time element is integrated concerning single insert of said inserts installed on said complex tool in case of the machining using single insert, and the machining time element is respectively integrated concerning a plurality of the inserts of the inserts installed on the complex tool in case of the machining simultaneously using a plurality of said inserts.

According to the invention of claim 4, the expiration of lifetime of each insert comprising the complex tool is integrated and judged, reflecting the actual using situation of each insert. So, correct control of expiration of lifetime according to machining contents is possible.

### BRIEF DESCRIPTION OF THE DRAWINGS

Fig.1 is a control block diagram showing an example of a complex machining machine tool to which the present invention is applied;
Fig.2 is a view obliquely showing an example of a workpiece to be machined;
Fig.3 is a typical view for explaining an example of tool data stored in tool file and its contents;
Fig.4 is a view obliquely showing an example of a complex tool;
Figs.5, 6, 7, and 8 are views showing details when the workpiece as shown in Fig.2 is machined with the complex tool;
Fig.9 is a typical view for showing an example of lifetime control file; and
Fig.10 is an example of machining with the complex tool, (a) is a view for showing an example of turning and (b) is a view for showing an example of milling.

### DESCRIPTION OF THE PREFERRED EMBODIMENTS

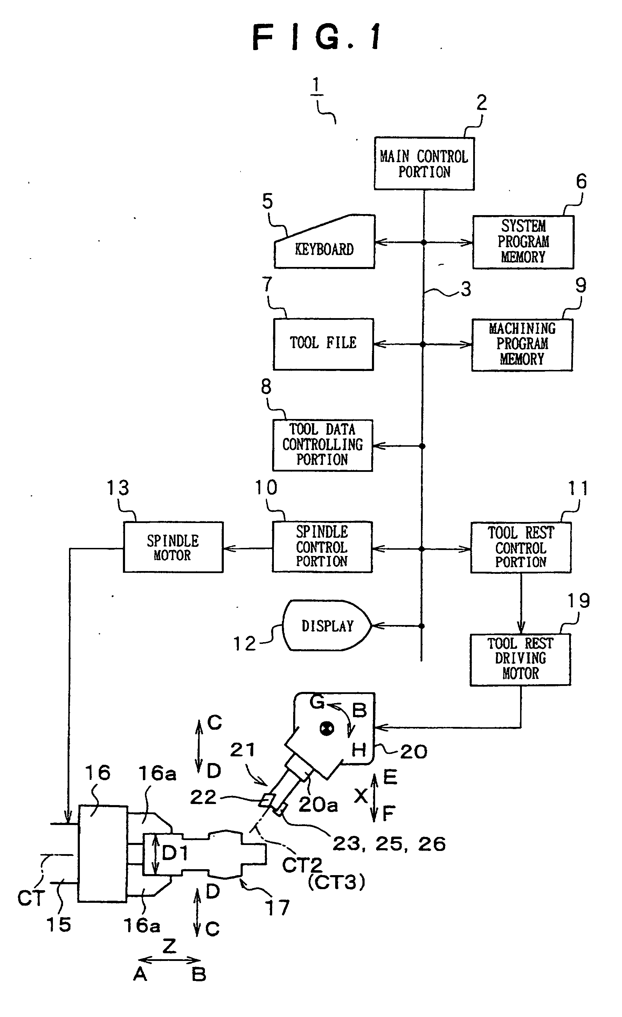

A complex machining machine tool 1 has a main control portion 2, as shown in Fig.1. With the main control portion 2, an input portion, such as a keyboard 5, a system program memory 6, a tool file 7, a tool data controlling portion 8, a machining program memory 9, a spindle control portion 10, a tool rest control portion 11 and a display 12 are connected through a bus line 3. A spindle motor 13 is connected with the spindle control portion 10. With the spindle motor 13, a spindle 15, being free to rotate, drive and position with axial center CT provided parallel to Z-axis as its center is connected. With the spindle 15, a chuck 16 is provided. Claws 16a are provided with the chuck 16, being free to hold and release a workpiece 17 to be machined, being free to move and drive in the direction as shown by arrows C and D.

Tool rest driving motors 19 (the plural number) are connected with the tool rest control portion 11. A tool rest 20 is connected with the tool rest driving motor 19, being free to move and drive in the Z-axis direction and in the direction as shown by arrows E and F rectangular to the Z-axis, that is, in the X-axis direction by the tool rest driving motor 19. Furthermore, the tool rest 20 is provided, being free to move and drive in Y-axis direction rectangular to the X-axis and Z-axis, and rectangular to the paper , and in the direction as shown by arrows G and H which is B-axis direction with the Y-axis as its center by the tool rest driving motor 19.

A tool holding portion 20a is formed on the tool rest 20. A turning tool, a milling/drilling tool, and a complex tool 21 capable of turning and milling/drilling machining are provided with the tool holding portion 20a, being free to attach, detach and exchange. The tool holding portion 20a is provided, being free to fix and hold the complex tool and other tools in a predetermined holding state, and being free to rotate, drive and position around axial center CT2.

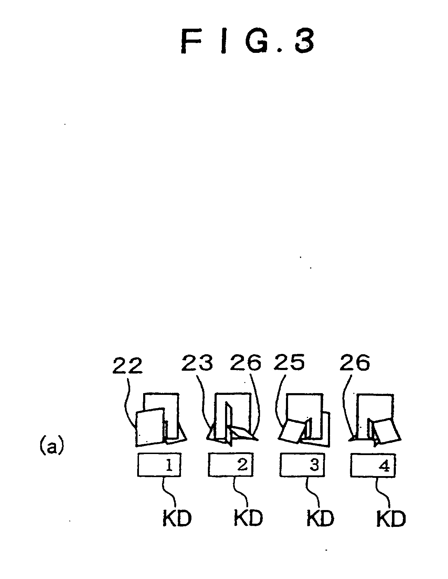

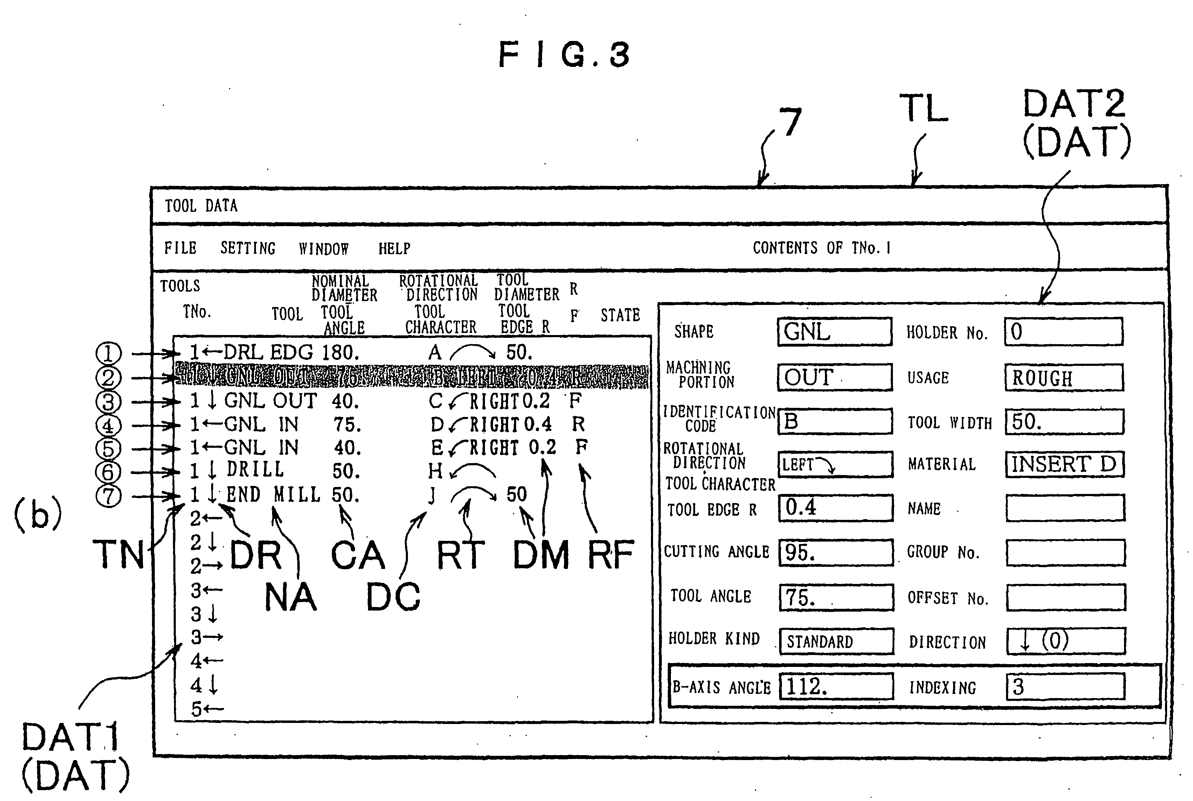

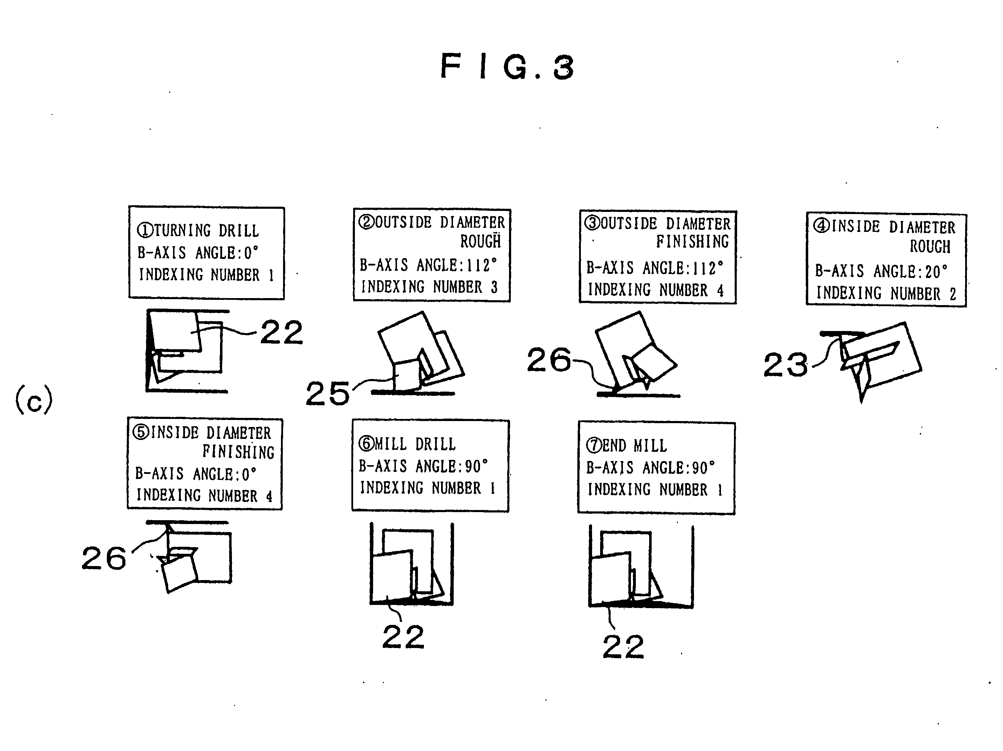

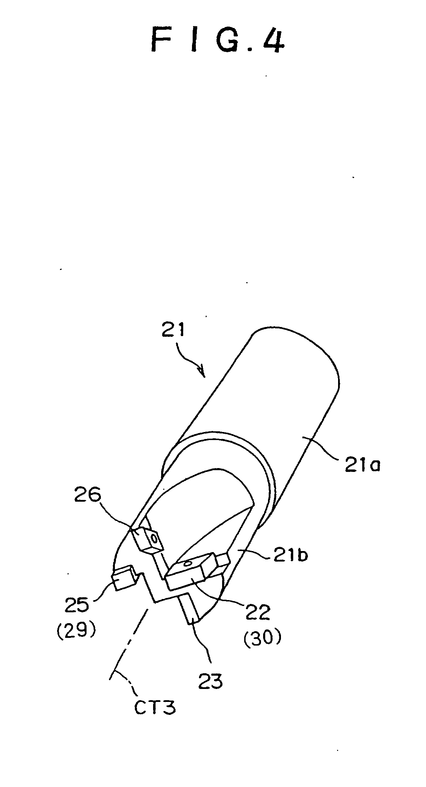

The complex tool 21 has a main body 21a formed in round bar shape, as shown in Fig.4. On the top of the main body 21a, an insert installation portion 21b is formed. Four inserts 22, 23, 25 and 26 are respectively installed on the insert installation portion 21b at the pitch of 90° with axial center CT3 of the main body 21a as its center so as to attach and detach. As shown in Fig.3 (a), indexing number KD is set for each insert. The indexing number KD is set as 1 for the insert 22, and clockwise, the indexing number KD is 2 for the insert 23, the indexing number KD is 3 for the insert 25 and the indexing number KD is 4 for the insert 26.

Tool name is allotted to the respective inserts 22, 23, 25 and 26 as a virtual tool according to the machining contents to be performed with the complex tool 21. For the insert 22 which indexing number KD is 1, three kinds of tool name, ① turning drill for performing drilling machining wherein tool itself does not rotate, ⑥ milling drill for performing drilling machining wherein tool itself rotates and ⑦ end mill for performing milling machining is allotted as a virtual tool, as shown in Fig.3(c). For the insert 23 which indexing number KD is 2, tool name NA, ④ inside diameter rough machining for performing turning rough machining on inside diameter is allotted, for the insert 25 which indexing number KD is 3, tool name NA, ② outside diameter rough machining for performing turning rough machining on outside diameter is allotted, and for the insert 26 which indexing number KD is 4, tool name NA, ③ outside diameter finishing for performing turning finishing machining on outside diameter and ⑤inside diameter finishing for performing turning finishing machining on inside diameter is allotted as a virtual tool.

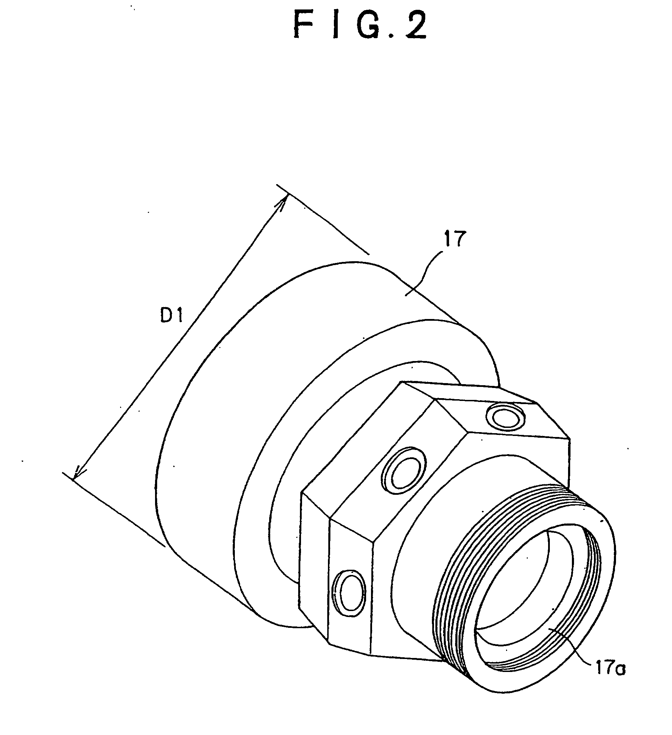

The complex machining machine tool 1 has the before-mentioned structure. Then, in order to machine the cylindrical workpiece 17 which diameter is D1, for instance, as shown in Fig.2, an operator inputs various kinds of machining data by a known automatic programming method, operating the keyboard 5 so as to compose machining program. On this occasion, the main control portion 2 composes the machining program PRO on the basis of the various kinds of data input by an operator according to a known automatic program composing program stored in the system program memory 6, then the composed machining program PRO is stored in the machining program memory 9.

After the machining program PRO concerning the workpiece 17 is composed, an operator instructs the main control portion 2 to machine the workpiece 17 through the keyboard 5. Receiving this instruction, the main control portion 2 reads out the machining program PRO concerning the workpiece 17 from the machining program memory 9 so as to execute machining, appropriately driving the spindle control portion 10 and the tool rest control portion 11.

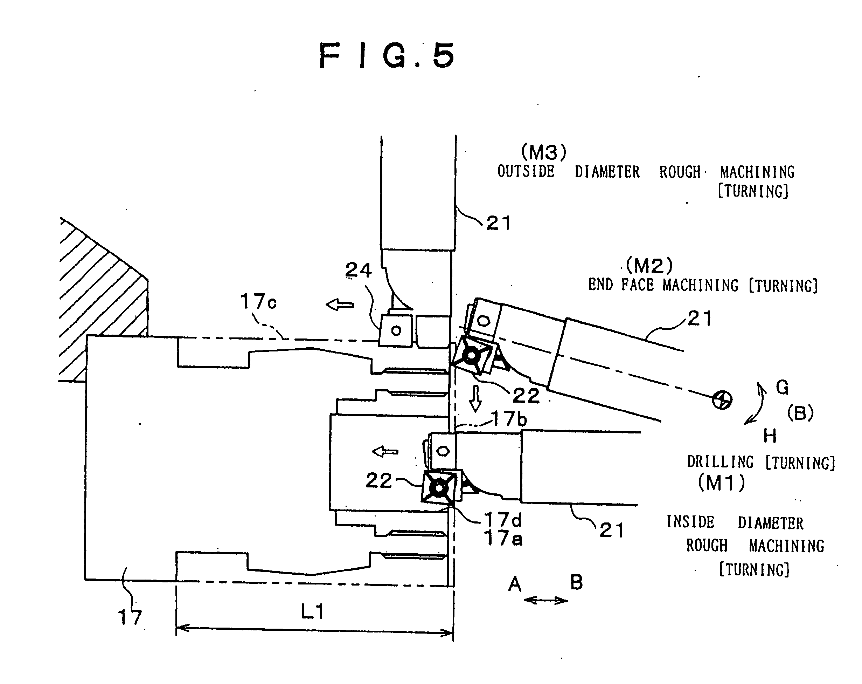

As shown in (M1) of Fig. 5, at the machining on the workpiece 17, the machining for forming a hole 17a on the central portion of the workpiece 17 by a drill is firstly performed. The tool to be used at this time is designated by the machining program PRO. The main control portion 2 refers to the tool file 7 when the tool to be used is designated by the machining program PRO, and reads out tool data TL of the corresponding tool.

In the tool file 7, tool number TN, tool setting direction DR, tool name NA, nominal diameter/tool angle CA, suffix DC, rotational direction/tool character RT, tool diameter/ tool edge R DM, finishing machining/rough machining division RF of the tool data DAT are set for each tool as chart data DAT1, as shown in Fig. 3 (b) . Furthermore, detailed data concerning each tool is stored as detailed data DAT2.

The complex tool 21 is set as an independent tool in this tool file 7, dividing into a plurality of virtual tools according to the machining contents capable of machining with the complex tool 21. For instance, seven virtual tools, on which the tool name NA and the suffix DC from ① to ⑦ mentioned before are affixed, are stored as the tool number TN 1 (the example of Fig.3 (b) is one example, and if the machining form with the complex tool 21 extends over many kinds, the virtual tools having many of tool name NA and suffix DC according to the machining kind are registered). That is, every machining contents allotted to the respective inserts 22 of the complex tool 21, the tool data of the inserts 22, 23, 25, 26 for performing the machining contents is stored in the tool file 7, regarding the respective inserts as an independent tool. For instance, the virtual tools ① through ⑦ corresponding to each virtual tool name NA as shown in Fig.3(c) are stored, corresponding to ① through ⑦ in Fig.3(b).

That is, the virtual tool of ①turning drill of Fig.3(c) is registered in such a manner that tool number Tno is 1, tool setting direction is ←, tool name NA is DRL EDG, nominal diameter/tool angle CA is 180, suffix DC is A, rotational direction/tool character RT is right rotation, and tool diameter/tool edge R DM is 50, as shown in ① of Fig.3(b). On this occasion, tool setting direction DR shows the tool direction as default value by the direction of an arrow, "←" shows the direction wherein the direction of the tool is parallel to the Z-axis, that is, the B-axis angle is 0° and " ↓ " shows the direction wherein the direction of the tool is parallel to the X-axis, that is, the B-axis angle is 90°.

The virtual tool of ② outside diameter rough machining of Fig.3(c) is registered in such a manner that tool number TNo is 1, tool setting direction DR is ↓ , tool name NA is GNL OUT, nominal diameter/tool angle CA is 75, suffix DC is B, rotational direction/tool character RT is left hand/right rotation, tool diameter/tool edge R DM is 0.4, finishing machining/rough machining division RF is R (rough machining), as shown in ② of Fig.3(b). The virtual tool of ③outside diameter finishing machining of Fig.3(c) is registered in such a manner that tool number TNo is 1, tool setting direction DR is ↓ , tool name NA is GNL OUT, nominal diameter/tool angle CA is 40, suffix DC is C, rotational direction/tool character RT is right hand/left rotation, tool diameter/tool edge R DM is 0.2, finishing machining/rough machining division RF is F (finishing machining), as shown in ③ of Fig.3(b).

Furthermore, the virtual tool of ④inside diameter rough machining of Fig.3(c) is registered in such a manner that tool number TNo is 1, tool setting direction DR is ←, tool name NA is GNL IN, nominal diameter/tool angle CA is 75, suffix DC is D, rotational direction/tool character RT is right hand/left rotation, tool diameter/tool edge R DM is 0.4, finishing machining/rough machining division RFis R (rough machining) , as shown in ④ of Fig.3(b). The virtual tool of ⑤ inside diameter finishing machining of Fig.3(c) is registered in such a manner that tool number TNo is 1, tool setting direction DR is ← , tool name NA is GNL IN, nominal diameter/tool angle CA is 40, suffix DC is E, rotational direction/tool character RT is right hand/left rotation, tool diameter/tool edge R DM is 0.2, finishing machining/rough machining division RF is F (rough machining), as shown in ⑤ of Fig.3(b).

The virtual tool of ⑥ mill drill of Fig.3(c) is registered in such a manner that tool number TNo is 1, tool setting direction DR is ↓ , tool name NA is drill, nominal diameter/tool angle CA is 50, suffix DC is H, rotational direction/tool character RT is left direction, as shown in ⑥ of Fig.3(b). The virtual tool of ⑦ end mill of Fig. 3 (c) is registered in such a manner that tool number TNo is 1, tool setting direction DR is ↓ , tool name NA is end mill, nominal diameter/tool angle CA is 50, suffix DC is J, rotational direction/tool character RT is right direction and tool diameter/tool edge R DM is 50, as shown in ⑦ of Fig.3(b).

Then, in the machining program PRO, as the tool to be used in the machining program PRO, the tool name NA and the suffix DC of the corresponding virtual tool are designated, regardless of use of the complex tool 21 in the machining, similar to the case of designating a normal tool even if the complex 21 is used. In case of the machining (M1) for forming the hole 17a on the central portion of the workpiece 17 as shown in Fig.5 as mentioned before, the virtual tool of ① turning drill of the complex tool 21 is used as a tool. So, in this designation, the tool name NA "DRL EDG" and the suffix DC "A" are input in the machining program PRO, similar to a normal tool designation. By doing so, the tool designation finishes only by acknowledging and designating each virtual tool in the tool file 7 by an operator without understanding the whole complex tool 21 at the time of composing the machining program PRO. Then, the composing of the machining program PRO is possible with no specific knowledge concerning the complex tool 21. Then, the main control portion 2 searches the tool data DAT of the tool file 7 so as to select the corresponding tool, that is, the virtual tool wherein the tool number TNo as shown in ① of Fig.3 (b) is 1 and tool name NA is "DRL EDG" and suffix DC is "A" as shown on the most upper hand of the figure, and instructs the tool rest control portion 11 to index the tool at the machining position. In the tool file 7, the respective tools (including ① through ⑦ as "virtual tool" regarded seven independent tools of the complex tool 21) are differentiated by tool name NA and suffix DC concerning turning machining related tool (in case of the same tool name NA, it is differentiated by changing suffix DC into "A", "B", "C", "D" and "E"), and are differentiated by tool name NA and nominal diameter/tool angle CA concerning the milling machining related tool, regardless of being the complex tool 21 or not. Then, when tool name NA and suffix DC or tool name NA and nominal diameter/tool angle CA are designated in the machining program PRO, the corresponding tool is immediately determined.

The tool rest control portion 11 drives the tool exchanger which is not shown, and selects the complex tool 21 which tool number TNo is 1 from the tool magazine which is not shown so as to install on the tool rest 20. When the complex tool 21 is installed on the tool rest 20, the tool rest control portion 11 refers to the detailed data DAT2 corresponding to ① turning drill from tool name NA and suffix DC designated in the machining program PRO, and reads out the indexing number KD concerning ①turning drill and the B-axis angle of the complex tool 21 shown in the detailed data DAT2.

The tool rest control portion 11 drives and controls a tool driving motor (not shown) built in the tool rest on the basis of the read indexing number KD concerning ①turning drill and the B-axis angle so as to rotate the complex tool 21 around the axial center CT3. Then, the complex tool 21 is positioned so as to be in the state that indexing number KD is 1. As shown in Fig.3(a), the state that the indexing number is 1 is one that the insert 22 is positioned, facing the upper hand in the figure (the Y-axis direction). Furthermore, the B-axis driving motor which is not shown is driven, and the tool rest 20 is moved and driven in the direction as shown by the arrows G and H, and the complex tool 21 is positioned so as to be such a state that the B-axis angular position is 0° , and it is parallel to the Z-axis, as shown in Fig.3(c). In this state, the spindle 15 is rotated and driven at a predetermined rotational number by the spindle driving motor 13, and the complex tool 21 is moved and driven in the arrow A direction of the Z-axis direction so as to form the hole 17a having a predetermined depth on the rotating workpiece 17 by the insert 22, as shown in Fig.5(M1).

Subsequently, an end face 17b of Fig.5(M2) is machined by the insert 22 of the complex tool 21. In this case, the tool rest control portion 11 drives the B-axis driving motor with such a state that the tool of ① turning drill is selected so as to rotate and drive the tool rest 20 a predetermined angle in the direction as shown by the arrow H of the B-axis. As shown in Fig.5(M2), the complex tool 21 is held in slightly inclined state with respect to the Z-axis, and the end face 17b of the workpiece is machined by the same insert 22.

Next, rough machining is performed on an outside diameter 17c of the workpiece 17 of Fig.5(M3) by the complex tool 21. In this case, in the machining program PRO, the virtual tool is designated, inputting "GNL OUT" as tool name NA and "B" as suffix DC. Then, the main control portion 2 searches the tool data DAT of the tool file 7, and selects the corresponding tool, that is, the virtual tool which tool name NA is "GNL OUT" and suffix DC is "B", which tool number is 1 shown on the second from the upper of the figure as shown in ② of Fig.3(b), and instructs the tool rest control portion 11 to index the tool to the machining position.

The tool rest control portion 11 refers to the detailed data DAT2 corresponding to ② outside diameter rough machining from tool name NA and suffix DC designated in the machining program PRO and reads out the indexing number "3" and the B-axis angle "112° " concerning ② outside diameter rough machining of the complex tool 21 as shown in the detailed data DAT2.

The tool rest control portion 11 drives and controls the tool driving motor (not shown) built in the tool rest on the basis of the read indexing number "3" and the B-axis angle "112° " concerning ②outside diameter rough machining so as to rotate the complex tool 21 around the axial center CT3. Then, the complex tool 21 is positioned so as to become to be such a state that indexing number KD is 3 as shown in Fig.3(a). Furthermore, the B-axis driving motor which is not shown is driven so as to move and drive the tool rest 20 in the direction as shown by the arrows G and H of the B-axis direction. Then, the complex tool 21 is positioned so as to become to be such a state that the B-axis angular position is 112° anticlockwise with respect to the Z-axis as shown in Fig.5(M3). In this state, as shown in Fig. 5 (M3) , the complex tool 21 is moved and driven in the direction as shown by the arrow A of the Z-axis direction so as to machine the outside diameter 17c of the rotating workpiece 17 the predetermined length L1 by the insert 25.

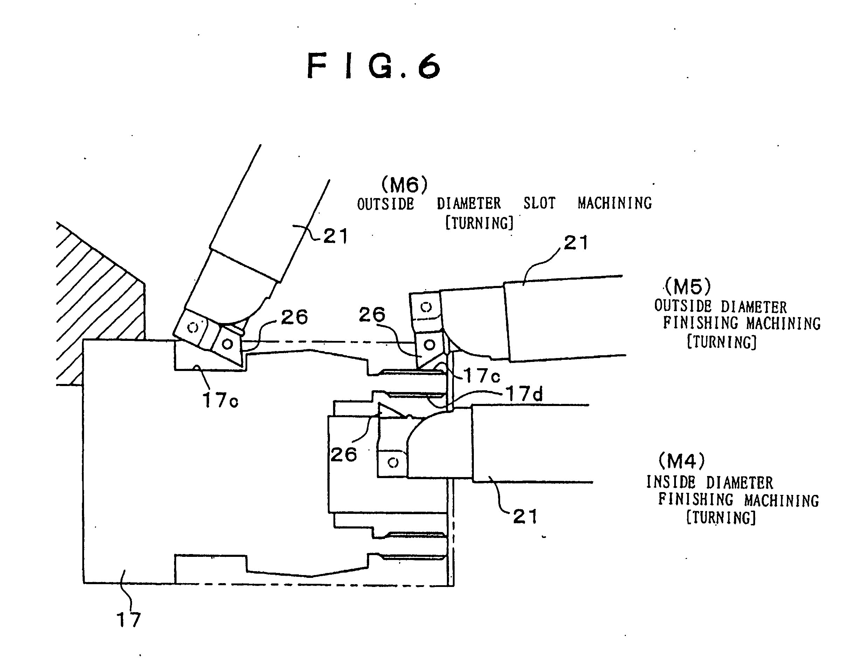

Next, finishing machining is performed on an inside diameter 17d of the workpiece 17 of Fig.6(M4) by the complex tool 21. In this case, in the machining program PRO, the virtual tool is designated, inputting "GNL IN" as tool name NA and "E" as suffix DC. Then, the main control portion 2 searches the tool data DAT of the tool file 7, and selects the corresponding tool, that is, the virtual tool which tool name NA is "GNL IN" and suffix DC is "E", which tool number TN is 1 as shown on the fifth from the upper of the figure as shown in ⑤ of Fig.3(b), and instructs the tool rest control portion 11 to index the tool to the machining position.

The tool rest control portion 11 refers to the detailed data DAT2 corresponding to ⑤ inside diameter finishing machining from tool name NA and suffix DC designated in the machining program PRO and reads out the indexing number "4" and the B-axis angle "0° " concerning ⑤ inside diameter finishing machining of the complex tool 21 as shown in the detailed data DAT2.

The tool rest control portion 11 drives and controls the tool driving motor (not shown) built in the tool rest on the basis of the read indexing number "4" and the B-axis angle "0° " concerning ⑤ inside diameter finishing machining so as to rotate the complex tool 21 around the axial center CT3. Then, the complex tool 21 is positioned so as to become to be such a state that the indexing number KD is 4 as shown in Fig.3(a). Furthermore, the B-axis driving motor which is not shown is driven so as to move and drive the tool rest 20 in the direction as shown by the arrows G and H of the B-axis direction. Then, the complex tool 21 is positioned such that the B-axis angular position is 0° with respect to the Z-axis, that is, so as to be parallel, as shown in Fig.6(M4). In this state, as shown in Fig.6(M4), the complex tool 21 is moved and driven in the direction as shown by the arrow A of the Z-axis direction so as to machine the inside diameter 17d of the rotating workpiece 17 the predetermined length by the insert 26.

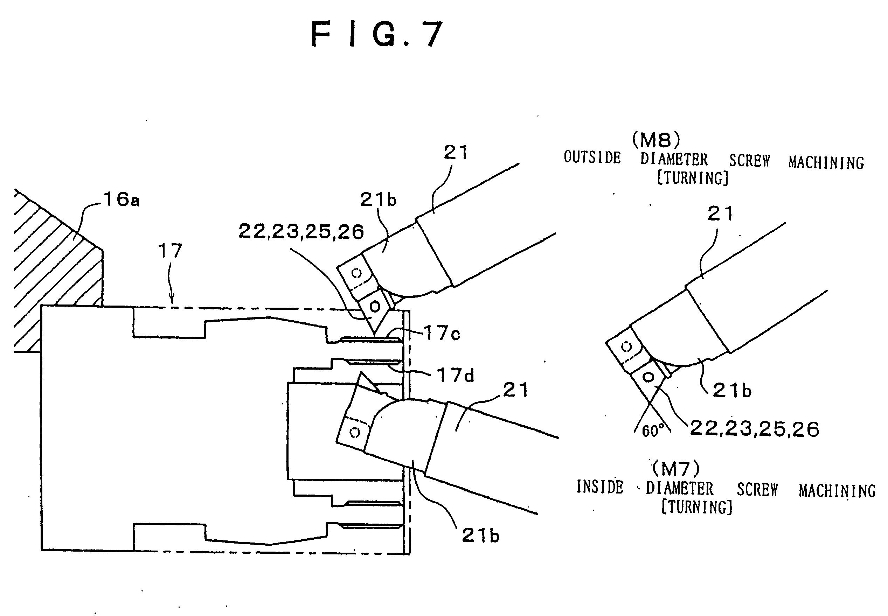

In this way, as shown in (M5), (M6) of Fig.6 and (M7), (M8) of Fig.7, the respective inserts 22, 23, 25, 26 of the same complex tool 21 are rotated around the tool axial center CT3 on the basis of the tool data DAT stored in the tool file 7 so as to selectively index and position the insert to be used for machining. And, the tool rest is properly rotated and positioned in the B-axis angular direction so as to perform various kinds of machining, such as the outside diameter finishing machining as shown in (M5) of Fig.6, the outside diameter slot machining as shown in (M6) of Fig.6, the inside diameter screw machining as shown (M7) of Fig.7, and the outside diameter screw machining as shown in (M8) of Fig.7, on the workpiece 17 by the respective inserts 22, 23, 25 and 26. On this occasion, the virtual tools ① through ⑦ as shown in Fig.3 (c) are not used in a part of the machining concerning Figs.6 and 7. But, in this case also, the machining is performed using the virtual tools concerning the complex tool 21 of Fig.4 set and stored in another part of the tool file 7. For instance, the virtual tool to be used for outside diameter finishing machining of Fig.6 (M5) is one which tool number TN is 1 (showing the complex tool 21), tool name NA is "GNL OUT", suffix DC is "K", indexing number KD is "2" and B-axis angle is "5° " in the tool file 7, and this is the machining with the insert 26.

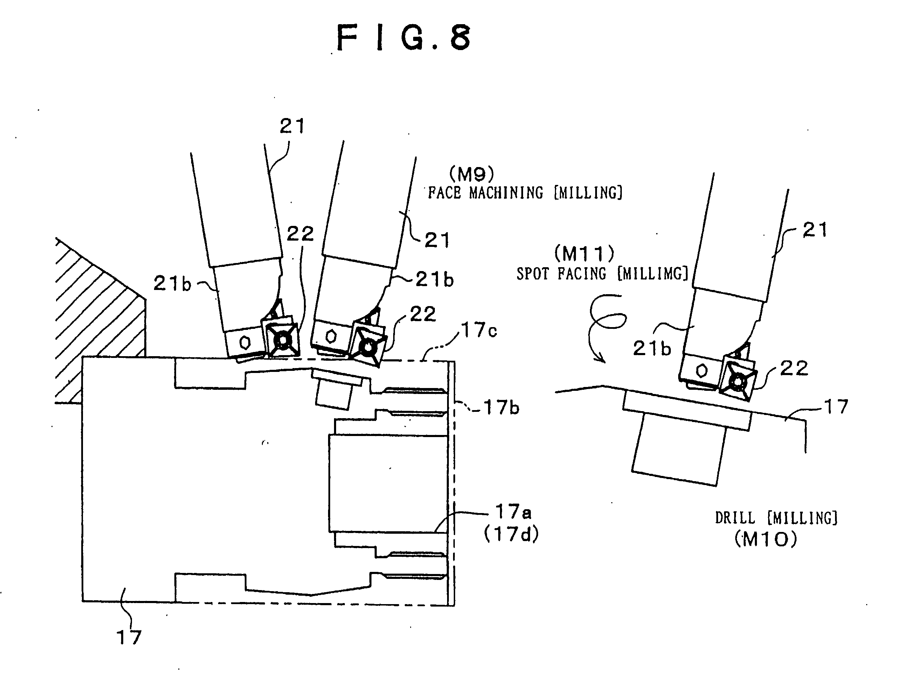

When the turning machining on the workpiece 17 finishes in this way, the milling machining as shown in Fig.8 (M9), (M10) and (M11) is performed at this time. In this case also, (M9) face machining, (M10) drilling machining and (M11) spot facing machining is performed on the workpiece 17 using ⑥ milling drill and ⑦ end mill of the virtual tools concerning the complex tool 21 set in the tool file 7 of the complex tool 21. ⑥ Milling drill and ⑦end mill of the virtual tools are the machining by the insert 22 both which indexing number is 1, as shown in Fig.3(c). Then, the milling machining is performed in such a manner that the workpiece 17 held by the spindle is fixedly held around the Z-axis or is rotated with C-axis control, changing the B-axis angle, rotating the complex tool 21 at a high speed with the axial center CT2 as its center.

By machining as mentioned before, the cutting machining can be performed on the workpiece as shown in Fig.2, for instance, from a round bar with one complex tool 21.

On this occasion, various kinds of inserts can be installed on the complex tool 21 according to the contents of machining since a plurality of numbers of inserts can be installed on the complex tool 21. With each insert, turning machining or milling machining is performed. At this time, milling machining can be of course performed simultaneously using the plural numbers of inserts in addition to the machining referring to Fig.6 or so, selectively using one insert of the plurality of inserts of the complex tool 21.

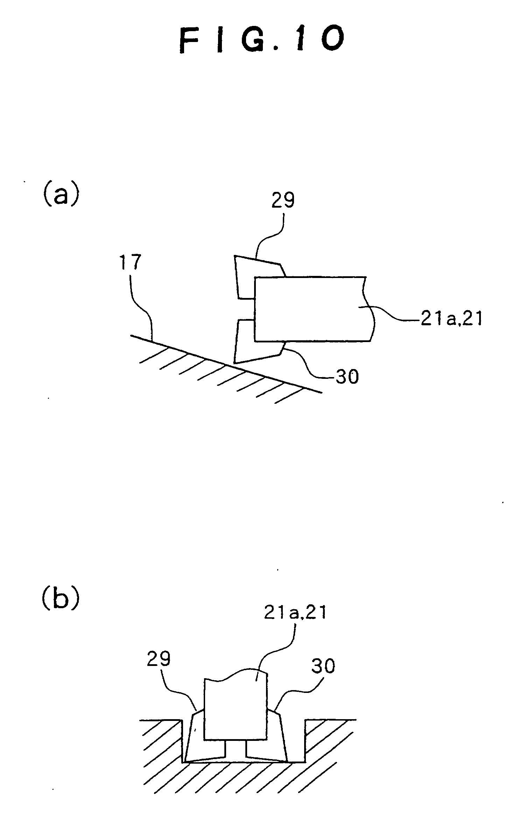

When machining is performed on the outer periphery of the workpiece 17, the machining to be considered are the turning machining on the outer periphery of the workpiece 17 with the insert 30 for instance, of the four inserts as shown in Fig.10(a) for instance, (The number of the inserts capable of installing on the complex tool 21 is not limited to four, but the complex tool 21 having four inserts provided at 90° pitch , similar to Fig.4, will now be explained for simple explanation. Only two inserts 29, 30 located having phase difference of 180° , are shown in Fig. 10. ) , and milling machining on the workpiece simultaneously using the inserts 29, 30 as shown in Fig.10 (b). As mentioned before, various machining is always performed using one or more inserts in the complex tool 21. So, the tool data control portion 8 controls lifetime of each complex tool 21 as mentioned hereinafter.

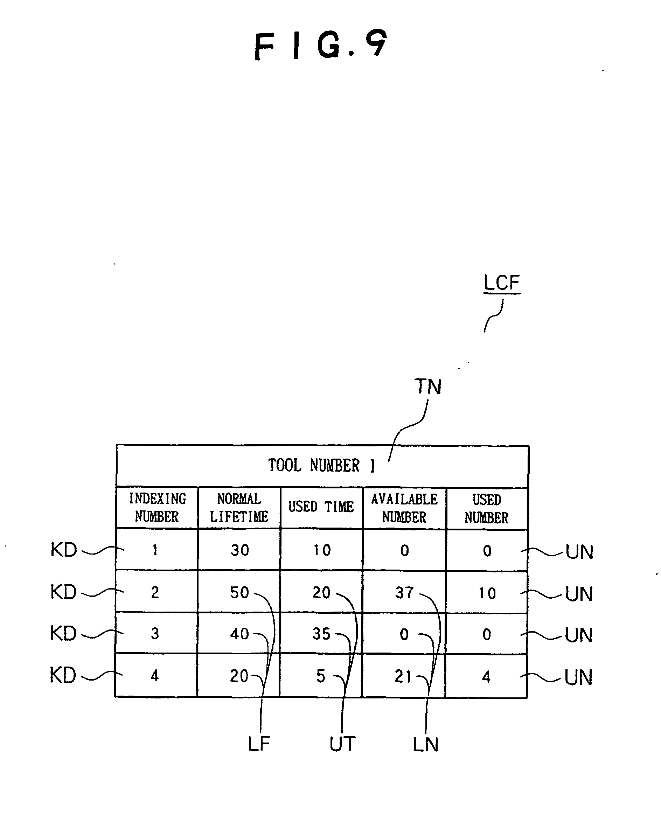

That is, the tool data control portion 8 stores lifetime control file LCF concerning each complex tool 21 in the tool file 7 for every each insert, together with the tool data TL as shown in Fig. 7 or as a part thereof, as shown in Fig.9.

In the lifetime control file LCF, indexing number KD in the complex tool 21 is adopted as the identification number corresponding to the insert installed on the complex tool 21 every tool number TN of each complex tool 21. In the example of Fig. 9, the four inserts 22, 23, 25, 26 are installed on the complex tool 21 of Fig.4 for instance at the pitch of 90° , and in order to show these installation positions, four indexing numbers are clockwise allotted with the axial center CT3 of the tool as its center, as shown in Fig.3(a). Therefore, the respective inserts 22, 23, 25, 26 and the indexing numbers KD can be corresponded with one to one. In place of the indexing number KD, some marks for identifying the respective inserts can be also of course used.

In the lifetime control file LCF, normal lifetime LF of each insert is set in advance as lifetime, corresponding to the indexing number KD which is the identification mark of each insert. This normal lifetime LF may be input in advance through the keyboard 5 by an operator at the time of machining start, or may be online written in the lifetime control file LCF from a tool preset room separately provided from the complex machining machine tool 1. When the machining to be performed by the complex tool 21 from now on is the machining for producing many of the same workpieces, the number of the workpieces capable of machining with the insert can be set in the shape of available number LN as the lifetime of the complex tool 21 in place of the normal lifetime LF. In this case, the machining time element to be integrated for judgement of lifetime is not used time UT of the insert, but the number of the workpieces machined. The value of this available number LN is obtained by dividing the time T1 into the normal lifetime LF of the insert and cutting off its remainder if the machining time of one workpiece is Tl. Then, the lifetime of the insert is within the normal lifetime LF although the predetermined number of workpieces are machined, and the number of the workpieces machined by the insert, that is, used number UN reaches the available number LN, so the workpiece is not machined by the insert exhausted.

When the tool data control portion 8 simulates the machining program to be executed from now on and judges that the machining using only one insert of the complex tool 21 will be performed predetermined time T1 as shown in Fig.10(a), for instance, the predetermined time TI is added to the used time UT of the insert, which is stored in the address of the indexing number KD where the insert to be used for machining is installed in the lifetime control file LCF, corresponding to the tool number TN of the complex tool 21 although the machining is turning machining, milling machining or drilling machining. For instance, in case of the machining of Fig. 10 (a) , the predetermined time TI is added to the used time UT corresponding to the address which indexing number KD is 1, corresponding to the insert 30.

When the used time UT of the insert exceeds the normal lifetime LF set on the insert in advance, the tool data control portion 8 notifies an operator that the insert of the complex tool 21 reaches expiration of lifetime during the machining by giving alarm, and instructs to use spare tool or exchange the insert. Then, an operator knows before machining on the workpiece that at least one of the inserts of the complex tool 21 reaches expiration of lifetime in fact before reaching expiration of lifetime during the machining on the workpiece. Therefore, it is not necessary to interrupt the machining after the complex tool 21 reaches expiration of lifetime during the machining on the workpiece and to perform complex and inefficient operation, such as exchange of tool.

In case where the lifetime of the insert is controlled by machining number, the tool data control portion 8 integrates one of the used number UN of the address of the indexing number KD corresponding to the insert of the lifetime control file LCF every time one workpiece is machined by the insert corresponding to the complex tool 21. When the used number UN reaches the available number LN, the tool data control portion 8 notifies an operator of the expiration of the lifetime of the insert of the complex tool 21, similar to the above-mentioned, and instructs to use a spare tool or to exchange the insert. In this case, the lifetime of the insert is controlled by the machining number. So, even if the used number UN becomes to be equal to the available number LN, the lifetime of the insert is maintained within the lifetime, as mentioned above.

When the tool data control portion 8 simulates the machining program to be executed from now on and judges that the machining simultaneously using two or more inserts 29, 30 of the complex tool 21 will be performed predetermined time TI as shown in Fig.10(b), for instance, the predetermined time TI is respectively added to the used times UT of these inserts, which are stored in the addresses of the indexing numbers KD where the inserts to be used for machining are installed (for instance, the indexing numbers KD are 1 and 3) in the lifetime control file LCF, corresponding to the tool number TN of the complex tool 21 although the machining is milling/fraise machining or drilling machining. For instance, in case of the machining of Fig.10(b), the predetermined time TI is respectively added to the used times UT corresponding to the addresses which indexing numbers KD are 1 and 3, corresponding to the inserts 29, 30 to be used at the same time.

When the used time UT of any insert of these inserts exceeds the normal lifetime LF set on the insert in advance, the tool data control portion 8 judges that the complex tool 21 reaches the expiration of the lifetime and notifies an operator that one or more inserts of the complex tool 21 reach expiration of lifetime during the machining by giving alarm, and instructs to use spare tool in place of the complex tool 21 or exchange the insert expected to be expiration of lifetime. Then, an operator knows before machining on the workpiece that at least one of the inserts of the complex tool 21 reaches expiration of lifetime in fact before reaching expiration of lifetime during the machining on the workpiece. Therefore, it is not necessary to interrupt the machining after the complex tool 21 reaches expiration of lifetime during the machining on the workpiece and to perform complex and inefficient operation, such as exchange of tool.

In case where machining is executed simultaneously using a plurality of inserts, the lifetime of each insert is integrated, respectively adding machining time to the used times UT of the inserts to be used for the machining. Therefore, the lifetime of every insert, comprising the complex tool 21, can be correctly controlled, regardless of the machining contents to be executed by the complex tool 21.

When lifetime is controlled by machining number in case where the machining using a plurality of inserts is executed, the used numbers UN of the indexing numbers KD corresponding to the inserts to be used with the complex tool 21 are respectively added by its machining number, and expiration of the lifetime of the complex tool 21 is judged when the added used number UN of one of the inserts of the complex tool 21 firstly reaches the available number LN, similar to the above-mentioned.

When the tool data control portion 8 judges that at least one of the inserts installed on a complex tool 21 reaches expiration of the lifetime, the complex tool 21 which lifetime reaches its expiration is exchanged into a spare complex tool 21, and the machining is continued.

Besides, the complex tool 21 which lifetime reaches its expiration is transferred to a tool preset room or the like, and the insert which reaches expiration of the lifetime is exchanged into a new one and is used again for machining. Therefore, a plurality of inserts installed on the complex tool 21 is effectively used for machining till each insert reaches expiration of the lifetime. Then, such situation that the expiration of the lifetime of the complex tool is judged and all of the inserts installed on the complex tool 21 is thrown away although some inserts does not already reach the expiration of the lifetime is avoided.

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

## Claims

1. Method of controlling lifetime of a complex tool (21), said complex tool (21) having a main body (21a) on which a plurality of inserts (22, 23, 25, 26) are installed, capable of performing turning machining and rotational tool machining by using a single or by simultaneously using some of the plurality of said inserts (22, 23, 25, 26); said method comprising:
- integrating machining time elements for every insert installed on said complex tool (21) to obtain the used time (UT) for every insert; storing the used time (UT) for every insert, and comparing the used time (UT) with a normal lifetime (LF) set for every insert in advance,
- issuing a notification signal if the used time (UT) for an insert reaches the normal lifetime (LF); and
- exchanging the insert which reaches expiration of lifetime into a new one and using the complex tool (21) again for machining.

2. The method of controlling lifetime of the complex tool (21) as set forth in claim 1 wherein said machining time elements are the time elements of use of the insert when a workpiece (17) is machined.

3. The method of controlling lifetime of the complex tool (21) as set forth in claim 1 wherein said machining time elements are a number of workpieces (17) machined by the insert.

4. The method of controlling lifetime of the complex tool (21) as set forth in claim 1 wherein when said machining time elements are integrated, the machining time elements are integrated concerning a single insert of said inserts (22, 23, 25, 26) installed on said complex tool (21) in case of the machining uses a single insert, and the machining time elements are respectively integrated concerning a plurality of the inserts (22, 23, 25, 26) installed on the complex tool (21) in case of the machining simultaneously uses a plurality of said inserts (22, 23, 25, 26).

## Patentansprüche

1. Verfahren zur Überwachung der Lebensdauer eines komplexen Werkzeugs (21) mit einem Hauptkörper (21a), an dem eine Vielzahl an Einsätzen (22, 23, 25, 26) angebracht ist und mit welchem eine Drehbearbeitung und eine Rotationsbearbeitung unter Verwendung eines einzigen Einsatzes oder unter gleichzeitiger Verwendung einiger Einsätze (22, 23, 25, 26) aus der Vielzahl derselben durchgeführt werden können, umfassend:
- Integrieren von Bearbeitungszeitelementen für jeden an dem komplexen Werkzeug (21) angebrachten Einsatz zur Ermittlung der Benutzungszeit (UT) eines jeden Einsatzes; Speichern der Benutzungszeit (UT) eines jeden Einsatzes und Vergleichen der Benutzungszeit (UT) mit einer für jeden Einsatz vorgegebenen normalen Lebensdauer (LF),
- Ausgeben eines Meldesignals, wenn die Benutzungszeit (UT) eines Einsatzes das Ende der normalen Lebensdauer (LF) erreicht und
- Austauschen des das Ende der Lebensdauer erreichenden Einsatzes durch einen neuen und erneutes Einsetzen des komplexen Werkzeugs (21) für die Bearbeitung.

2. Verfahren zur Überwachung der Lebensdauer des komplexen Werkzeugs (21) nach Anspruch 1, **dadurch gekennzeichnet, dass** die Bearbeitungszeitelemente die Zeitelemente der Benutzung des Einsatzes bei der Bearbeitung eines Werkstücks (17) sind.

3. Verfahren zur Überwachung der Lebensdauer des komplexen Werkzeugs (21) nach Anspruch 1, **dadurch gekennzeichnet, dass** die Bearbeitungszeitelemente eine Anzahl an durch den Einsatz bearbeiteten Werkstücken (17) sind.

4. Verfahren zur Überwachung der Lebensdauer des komplexen Werkzeugs (21) nach Anspruch 1, **dadurch gekennzeichnet, dass**, wenn die Bearbeitungszeitelemente integriert sind, diese in Bezug auf einen einzigen Einsatz aus den an dem komplexen Werkzeug (21) angebrachten Einsätzen (22, 23, 25, 26) integriert werden, wenn das Bearbeitungsverfahren einen einzigen Einsatz verwendet, und die Bearbeitungszeitelemente jeweils in Bezug auf eine Vielzahl an am komplexen Werkzeug (21) angebrachten Einsätzen (22, 23, 25, 26) integriert werden, wenn das Bearbeitungsverfahren gleichzeitig eine Vielzahl an Einsätzen (22, 23, 25, 26) verwendet.

## Revendications

1. Procédé pour surveiller la durée de vie d'un outil complexe (21), lequel outil complexe (21) comportant un corps principal (21a) sur lequel est installée une pluralité d'inserts (22, 23, 25, 26) et capable d'exécuter des opérations de tournage et des usinages rotatifs en utilisant soit un seul insert soit simultanément quelques-uns de ladite pluralité d'inserts (22, 23, 25, 26), ledit procédé consistant à
- intégrer des éléments temps d'usinage pour chaque insert installé sur l'outil complexe (21) en vue d'obtenir le temps d'utilisation (UT) de chaque insert ; mettre en mémoire le temps d'utilisation (UT) de chaque insert et comparer le temps d'utilisation (UT) avec une durée de vie normale prédéterminée (LF) de chaque insert,
- sortir un signal d'avertissement si le temps d'utilisation (UT) d'un insert atteint la fin de la durée de vie normale (LF) et
- remplacer l'insert ayant atteint la fin de la durée de vie par un nouveau et poursuivre l'usinage avec l'outil complexe (21).

2. Procédé pour surveiller la durée de vie de l'outil complexe (21) selon la revendication 1, **caractérisé en ce que** les éléments temps d'usinage sont les éléments temps d'utilisation de l'insert lors de l'usinage d'une pièce à usiner (17).

3. Procédé pour surveiller la durée de vie de l'outil complexe (21) selon la revendication 1, **caractérisé en ce que** les éléments temps d'usinage sont un nombre de pièces à usiner (17) usinées par l'insert.

4. Procédé pour surveiller la durée de vie de l'outil complexe (21) selon la revendication 1, **caractérisé en ce que**, si les éléments temps d'usinage sont intégrés, ils le sont par rapport à un seul insert parmi les inserts (22, 23, 25, 26) installés sur l'outil complexe (21) lorsque l'usinage n'utilise qu'un seul insert, et que les éléments temps d'usinage sont respectivement intégrés par rapport à une pluralité d'inserts (22, 23, 25, 26) installés sur l'outil complexe (21) lorsque l'usinage utilise simultanément une pluralité desdits inserts (22, 23, 25, 26).
